# EUROPEAN PATENT SPECIFICATION

(11) **EP 2 761 572 B1**
(45) Date of publication and mention of the grant of the patent: **01.06.2016**
(21) Application number: 12835586.4
(22) Date of filing: 28.09.2012
(51) Int. Cl.: G06Q 50/10, H04N 9/82, G06F 17/30, H04L 29/06, H04N 21/658, H04N 21/81

(54) **MUSIC ON VIDEO SITE**
MUSIK AUF EINER VIDEO-WEBSITE
MUSIQUE SUR UN SITE VIDÉO

(30) Priority: 30.09.2011 US 201113250187
(43) Date of publication of application: 06.08.2014
(60) Divisional application: 16164945.4
(73) Proprietor: Google Inc., Mountain View, CA 94043 (US)
(72) Inventor: ROSSETTI, Leonardo, Mountain View, California 94043 (US)
(74) Representative: Betten & Resch
(86) International application number: PCT/US2012/057989
(87) International publication number: WO 2013/049616

(56) References cited:
- WO-A2-2007/057850
- JP-A- 2008 146 057
- JP-A- 2008 146 057
- JP-A- 2008 225 379
- US-A1- 2005 091 508
- US-A1- 2008 004 731
- US-A1- 2012 232 681
- US-B1- 6 697 564

## Description

### TECHNICAL FIELD

The disclosure relates to accessing music on internet video sites.

### BACKGROUND

Many computing devices allow users to store songs in digitally encoded media files for playback by the computing device or for transmission to and playback on another device. Examples of these devices are personal computers, tablet computers, dedicated music player devices, and mobile telephones. Users create libraries of songs that are stored on a device, for example, by purchasing the songs from on-line music stores or by copying the music from compact discs or other media. These songs then are accessible on the device and can be played on demand by the user. As an extension of this capability, these devices allow users to create lists of songs that can be executed to play a series of songs in the order they appear in the list, or in a randomized order. This is a popular feature of music playing devices, as it allows users to create different lists of music for different purposes, such as a music playlist for a party or a music playlist for jogging. Users invest significant amounts of time in developing these playlists.

Some mobile devices, such as mobile phones, have the capability to play music, but have limited storage capability. Also, it is inconvenient to transfer music from one device such as a personal computer and store it on other devices.

JP 2008/146057 A relates to a music/video reproduction device capable of displaying a background video image which is suitable for a music piece data. Background genre data are read out from music piece data which are registered in a music piece reservation area, and set to the lowest rank of the data in which a check position for checking key information stored in a key information storing buffer. When the key information stored in the position matches key information in the background genre data, a background genre corresponding to the matched key information is obtained, and background video data are obtained from background video management data corresponding to the determined background genre, and reproduction is started by sending the selected background video data to a background video signal creation circuit.

US 2005/091508 A1 relates to a method and apparatus for managing digital rights of a portable storage device. The method comprises a device performing authentication together with the portable storage device and sharing an encryption key with the portable storage device as a result of the authentication, requesting a rights object list from the portable storage device, receiving the rights object list from the portable storage device, and processing and displaying the rights object list.

### SUMMARY

Disclosed herein are systems and methods for identifying and playing music on a video site.

The present invention is defined in the independent claims. The dependent claims define embodiments of the present invention.

A method that is performed by one or more server computers, includes receiving, from a client, a plurality of music titles for respective music pieces that a user has the right to listen to; determining, for one of the plurality of music titles, that a matching video stored on the server has the respective music piece for the music title as an audio component of the matching video; adding the matching video to a list of matching videos; and storing the list of matching videos on the one or more server computers so that it is accessible to a user associated with the client.

A video server including one or more server computers, includes an object store containing a plurality of videos each having an audio component; a search component that receives a plurality of music titles for respective music pieces that a user has the right to listen to and determines, for one of the plurality of music titles, that a matching video of the plurality of videos in the object store has the respective music piece for the music title as an audio component of the matching video; and a list manager that adds the matching video to a list of matching videos and stores the list of matching videos on the one or more server computers so that it is accessible to a user associated with the client.

A video server including one or more server computers, includes an object store containing a plurality of videos each having an audio component; a list store; a search component that receives, from a client, a plurality of music titles for respective music pieces that a user has the right to listen to and determines, for one of the plurality of music titles, that a matching video of the plurality of videos in the object store has the respective music piece for the music title as an audio component of the matching video; and a list manager that adds the matching video to a list of matching videos, associates the list of matching videos with a user account specified by the client, and stores the list of matching videos in the list store so that it is accessible to a user associated with the user account.

### BRIEF DESCRIPTION OF THE DRAWINGS

The description herein makes reference to the accompanying drawings wherein like reference numerals refer to like parts throughout the several views, and wherein:
FIG. 1 is block diagram showing an exemplary environment for operation of a system for indentifying and playing music on a video site;
FIG. 2 is a flow chart showing an exemplary process for indentifying and playing music on a video site; and
FIG. 3 is a block diagram showing an exemplary computer system in which embodiments of this disclosure may be implemented.

### DETAILED DESCRIPTION

Publicly available, internet connected video sites have vast libraries of videos with music content. These sites are legally accessible by the public through the internet. Users of the internet are able to access the libraries on these sites and listen to the music by having the music streamed to an internet connected device. However, there is no facility for identifying videos corresponding to user libraries and playlists to allow more convenient access to the music available on these publicly available, internet connected video sites.

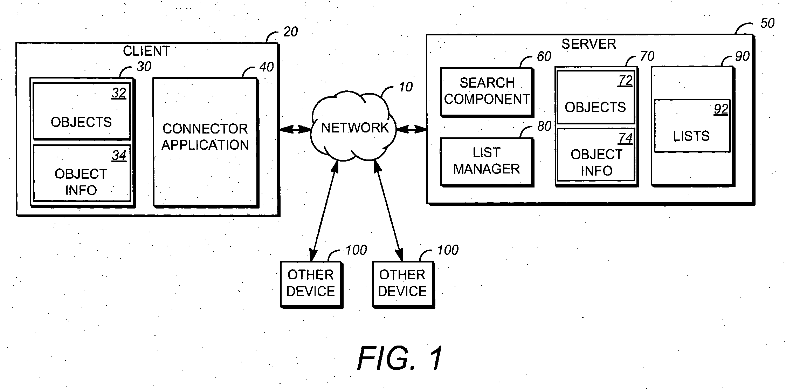

FIG. 1 shows a client 20, a server 50, and one or more other devices 100 that are all connected for transmission of data, signals, and other electrical communications with one another by a network 10, such as the internet. Client 20 and one or more other devices 100 are related to each other in that they are controlled by a common user and / or are used to access a single user account that is maintained by server 50. For example, client 20 can be a personal computer that is utilized by the user, and other devices 100 could include an internet connected mobile telephone that is utilized by the user. In addition to servicing the user that is associated with client 20 and other devices 100, server 50 also services a large number of other, distributed users, each of which is associated with an additional client that is analogous to client 20 and optionally with one or more other devices that are analogous to other devices 100.

Client 20 includes a client side object store 30. Client side object store 30 is a computer-readable media that is operable to store data in a form that can be accessed and used by client 20. Client side object store 30 can be a conventional storage device, such as a hard disk drive, an optical disk, a floppy disk; a memory card, or any other suitable type of storage now known or later developed.

Client side object store 30 contains a plurality of client side objects 32 and object information 34 that relates to client side objects 32. Object information 34 can be encoded within each of client side objects 32, such that each client side object 32 contains object information 34 corresponding to the music piece encoded in it, or object information 34 could be encoded separately from client side objects 32.

Client side objects 32 are music pieces that are encoded in a computer interpretable format. As used herein, "music piece" refers to an audio recording of definite length, analogous to an audio track. A music piece can correspond to a single musical composition. However, the term "music piece" can encompass works other than musical compositions, such as an audio book or a portion of an audio book.

The music pieces that are encoded as client side objects 32 can be music pieces that the user has the right to listen to, for example, on a music service, by possession of a license to listen to the music pieces, or by virtue of the public domain status of the music pieces. The user's right to listen to the respective music pieces can derive from content licenses that are associated with client 20. The content licenses can be computer readable documents that are stored in client side object store 30 in association with client side objects 32.

One well-known format by which music pieces can be encoded in a computer interpretable format is the MPEG-1 or MPEG-2 Audio Layer III format, which is commonly referred to as MP3 format. Other audio encoding formats, public or proprietary, now known or later developed, can be utilized as a basis for encoding the music titles as client side objects 32.

Object information 34 is metadata that describes one or more characteristics of client side objects 32. Object information 34 can be stored in a metadata container that is a portion of each client side object 32. One example of storage of object information 34 within each client side object 32 is an ID3 format tag, which is commonly appended to MP3 format media files. As an alternative, object information 34 can be in the form of one or more files that are stored separately from client side objects 32 in client side object store 30. One example of separate storage of object information 34 separate from client side objects 32 is an index file that contains object information 34 for some or all of client side objects 32. An XML format file can be used for this purpose. Another example of an index file in which object information 34 can be stored is a playlist file that identifies a plurality of client side objects 32, such as by file name or music title, and also specifies a play order for client side objects 32. One example of a playlist file format that can be used to encode object information 34 is an M3U format playlist file.

Object information 34 includes music titles for one or more of the music pieces that are encoded as client side objects 32. In addition to the music title, object information 34 can optionally include additional information such as the artist, album, and track number for the music pieces that are encoded as client side objects 32.

As used herein, the term "music title" refers to a title that is used to identify a respective music piece, such as the title of an individual track of an album. A music title need not, however, be unique to that music piece. On the contrary, a music title that identifies one of client side objects 32 could also identify other music pieces. These other music pieces could be alternative versions of musical composition or other work on which the music piece is based, or could be otherwise unrelated works that coincidentally have the same music title.

Client 20 also includes a connector application 40 that is operable to send object information 34 to the server 50. Connector application 40 can be an executable software program that is resident on client 20. For example, the connector application can compile object information 34 from various sources on client 20, such as from client side objects 32 themselves or from object information 34 in the form of an index file, and upload object information 34 to the server, either in response to a user request, or as a scheduled task that executes periodically. As an alternative, connector application 40 can be a web application that is provided to client 20 by server 50, using web browser software that is resident on and executed by client 20. The web application either scans client side object store 30 to compile object information 42, or alternatively, is pointed to a specific file, such as an index or a playlist file that contains object information 34, by the user.

Server 50 includes a search component 60, a server side object store 70, a list manager 80, and a list store 90. Server side object store 70 and list store 90 are storage devices or portions of storage devices. A single physical storage device can include both server side object store 70 and list store 90. Any suitable storage device can be utilized, as described in connection with client side object store 30.

Search component 60 and list manager 80 can be implemented in the form of executable software programs or functions that are resident on server 50 and are operable to perform the functionality described herein when executed by server 50. Search component 60 and list manager 80 are in communication with one another, in that search component 60 receives input from list manager 80 and provides output to list manager 80 in response.

List manager 80 is operable to receive object information 34 that is transmitted to server 50 from the connector application of client 20. Based on received object information 34, list manager 80 formulates search queries and transmits the search queries to search component 60. The search queries formulated and transmitted by list manager 80 can be in any suitable form, structured or unstructured. As an example, the queries could be unstructured lists of one or more keywords. As another example, the queries could be structured queries including a keyword to be searched for each of one or more identified search fields, such as title, album, artist name, etc.

Search component 60 receives search queries from list manager 80. Search component 60 utilizes the search queries that it receives from list manager 80 to perform search queries based on object information 34 that is received from client 20 to determine whether one or more server side objects 72 that are disposed within server side object store 70 correspond to the parameters specified by object information 34. The search can be performed by the search component by comparing the parameters specified by the search queries to server side object information 74, which is metadata that describes server side objects 72.

Server side objects 72 that are stored in server side object store 70 of server 50 are videos that include an audio component. When search component 60 determines whether one of server side objects 72 within server side object store 70 is a matching video with respect to the music pieces stored as client side objects 32, search component 60 can do so on the basis that the music title specified by object information 34 corresponds to the music piece that is encoded as the audio component of the video that is stored as server side object 72 within server side object store 70. In order to allow identification of server side object 72 by search component 60, server side object information 74 can be stored within server side object store 70, either within server side objects 72 themselves or separate from server side objects 72.

After search component 60 executes the search queries, it provides search results to list manager 80 in the form of an identification of one or more of server side objects 72 that are present within server side object store 70. If the search results that are received from search component 60 indicate that one or more of server side objects 72 match client side objects 32 as described by object information 34, list manager 80 adds client side objects 32 that are identified as matching to a list 92 of matching objects. List manager 80 then stores the list of matching objects 72, 32 in list store 90.

List 92 can be associated with a user account that is specified by client 20. For example, list store 90 can be a portion of a profile that is associated with the user account. By associating list 92 with a user account, list 92 can be accessed by the user when using other devices 100. This allows the user to access list 92 from a device other than client 20 on which client side objects 32 are stored.

Server 50 is operable to transmit server side objects 72 in response to a playback request. Transmission of server side objects 72 can be in the form of a streaming video transmission within a web page or web application. When server 50 receives a playback request that is associated with the user account and that designates list 92 of matching videos, server 50 transmits one or more of server side objects 72 that are specified by list 92 in response to the playback request. For example, the playback request can be made by one of other devices 100 that is associated with the user account, and server side objects 72 are transmitted to other device 100 in response to the playback request.

Additional related functionality can optionally be provided by server 50. As an example, list manager 80 can be configured to transmit a verification request to client 20 in order to verify that server side objects 72 identified as matching by search component 60 actually correspond to client side objects 32. The verification request is transmitted to client 20 by list manager 80 and identifies at least one of the matching objects of list 92. The verification request can cause a prompt to be displayed by client 20, which requests that the user provide input in the form of either a positive response, which indicates that server side object 72 is a match to client side object 32, or a negative response, which indicates that server side object 72 is not a match to client side object 32. The response is transmitted to list manager 80 of server 50 by client 20. If a negative response is received, list manager 80 removes the reference to server side object 72 from list 92.

Server 50 can be configured to allow list 92 to be modified by client 20. For example, client 20 can transmit to server 50 a request to modify list 92 of matching objects. This request could be, for example, in the form of selection, by the user of client 20, of a modification command that is present on a screen that is presented to a user of client 20, such as in the form of a web page. The request to modify list 92 includes an identification of one or more of server side objects 72 that is to be added or deleted from list 92. In response to the request, list manager 80 modifies list 92. Updated list 92 is then transmitted to client 20.

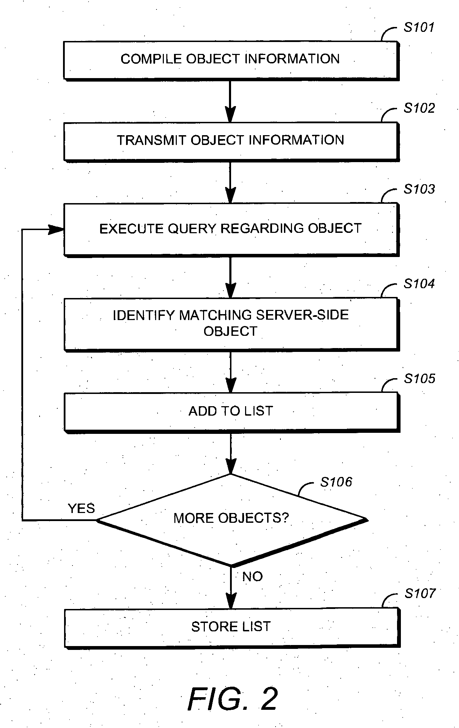

An example of a process for playing music on a video site will be explained with reference to FIG. 2.

In step S101, object information 34 is compiled by connector application 40. Client 20 then transmits object information 34 to server 50 over network 10 in step S102, and list manager 80 of server 50 receives object information 34. In other embodiments, transmission can be initiated by list manager 80. List manager 80 formulates a query based on object information 34 received from client 20 and transmits the query to search component 60. Search component 60 then executes the queries regarding client side objects 32 in step S103.

In step S104, search component 60 identifies one or more server side objects 72 and reports the results to list manager 80, which adds an identification of the matching objects of server side objects 72 to list 92 in step S105. In one embodiment, where multiple server side objects 72 are identified in response to a single query, list manager 80 determines which matching server side object 72 to add to list 92 (for example by random choice or by choosing an object that matches best). As one example, list manager 80 determines which matching server side object 72 to use based at least in part on the identity of the user that uploaded server side object 72 to server 50. Certain users could be given status as an "official" or "preferred" uploader, based on quality of the content provided, a certification process, a licensing arrangement, or other circumstance, and this recognition would be given weight by list manager 80 when selecting between multiple server side objects 72. As another example, list manager 80 determines which matching server side object 72 to use based on the number of times that server side object 72 has been viewed. In a further example, the image resolution or other measure of quality of server side object 72 is used by list manager 80 as a basis for determining which server side object 72 to use. In another example, the preferences of other users, such as indications by other users that they like a particular object (e.g., ratings), are used by list manager 80 as a basis for determining which server side object 72 to use. In other embodiments, list manager 80 accepts input from a user to choose which of multiple matching objects 72 to use.

In step S106, it is determined whether object information 34 that was received by server 50 identifies additional client side objects 32 for which search queries must be performed by search component 60. If there are additional client side objects 32 for which searches must be performed, step S106 evaluates as "yes," and the process returns to step S103. If there are no more client side objects 32 that are identified by object information 34 for which additional searches must be performed, step S106 evaluates as "no," and the process proceeds to step S107. In step S107, completed list 92 is stored in list store 90.

Thus, completed list 92 is available for the user associated with client 20. The user can access the video service to access a playlist of videos that have the same musical content as is stored on his client-side device. By playing the video playlist, the user can access his playlist when he is away from his client device. Some implementations also allow the user to manage his video playlist to change the order of the videos and to add or delete videos from the playlist. Some implementations also allow other users to access the user's playlist, either publicly or with permission of the user, or both.

For example, a user could use an implementation to create a playlist of videos that have the soundtrack of the songs stored on his personal music device. He could then play that playlist at a location where he did not have access to his personal music device.

Although the disclosure herein is made with reference to music pieces as client side objects 32 and videos having an audio component as server side objects 72, the invention can be applied in other contexts. For example, in alternative embodiments, client side objects 32 and server side objects 72 could be movies, ebooks, contacts, and other types of media or objects.

Client 20, server 50, other devices 100, and other elements of the systems discussed in this disclosure can be implemented in the form of one or more machines or devices capable of performing the described functions. These devices could be or include a processor, a computer, specialized hardware or any other device. The described functionality can be embodied in software instructions that are executable by the device or devices.

As used herein, the term "computer" means any device of any kind that is capable of processing a signal or other information. Examples of computers include, without limitation, an application-specific integrated circuit (ASIC) a programmable logic array (PLA), a microcontroller, a digital logic controller, a digital signal processor (DSP), a desktop computer, a laptop computer, a tablet computer, and a mobile device such as a mobile telephone. A computer does not necessarily include memory or a processor. A computer may include software in the form of programmable code, micro code, and or firmware or other hardware embedded logic. A computer may include multiple processors that operate in parallel. The processing performed by a computer may be distributed among multiple separate devices, and the term computer encompasses all such devices when configured to perform in accordance with the disclosed embodiments.

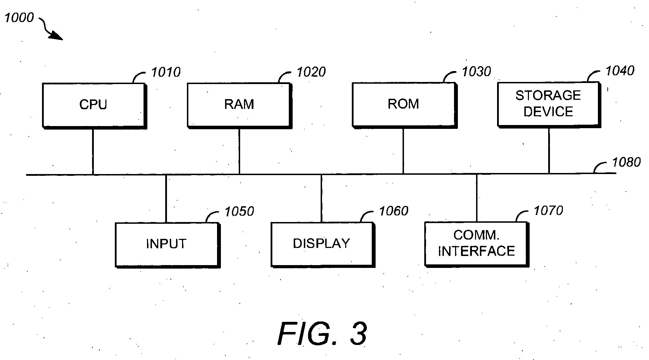

An example of a device that can be used as a basis for implementing the systems and functionality described herein is a computer 1000, as shown in FIG. 3. Computer 1000 can be any suitable conventional computer. As an example, computer 1000 includes a processor such as a central processing unit (CPU) 1010 and memory such as RAM 1020 and ROM 1030. A storage device 1040 can be provided in the form of any suitable computer readable medium, such as a hard disk drive. One or more input devices 1050, such as a keyboard and mouse, a touch screen interface, etc., allow user input to be provided to CPU 1010. A display 1060, such as a liquid crystal display (LCD), a cathode-ray tube (CRT) or a light-emitting diode (LED) display, allows output to be presented to the user. A communications interface 1070 is any manner of wired or wireless means of communication that is operable to send and receive data or other signals using network 10. CPU 1010, RAM 1020, ROM 1030, storage device 1040, input devices 1050, display 1060 and communications interface 1070 may be all connected to one another by a bus 1080.

Client 20, server 50, other devices 100, and other elements of the systems discussed in this disclosure can be implemented in the form of a single system or in the form of separate systems. Moreover, each of client 20, server 50, other devices 100, and other elements of the systems discussed in this disclosure can be implemented in the form of multiple computers, processors, or other systems working in concert. As an example, the functions of server 50 can be distributed among a plurality of computers, such as computer 1000, each of which is capable of performing some or all of the functions of server 50.

As previously noted, components of the systems described herein can be connected for communications with one another by networks such as network 10. The communications functions described herein can be accomplished using any kind of network or communications means capable of transmitting data or signals. Suitable examples include the internet, which is a packet-switched network, a local area network (LAN), wide area network (WAN), virtual private network (VPN), cellular telephone network, or any other means of transferring data. A single network or multiple networks that are connected to one another can be used. It is specifically contemplated that multiple networks of varying types can be connected together and utilized to facilitate the communications contemplated by the systems and elements described in this disclosure.

While this disclosure includes certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method performed by one or more server computers, comprising:
receiving, from a client, a plurality of music titles for respective music pieces that a user has the right to listen to;
determining, for a music title of the plurality of music titles, that a matching video stored on the one or more server computers has the respective music piece for the music title as an audio component of the matching video (S104);
adding the matching video to a list of matching videos (S105);
storing the list of matching videos (S107) on the one or more server computers so that it is accessible to a user associated with the client;
associating the list of matching videos with a user account specified by the client;
receiving a playback request that is associated with the user account; and
transmitting one or more matching videos specified by the list of matching videos in response to the playback request.

2. The method of claim 1, wherein the respective music pieces that the user has the right to listen to correspond to at least one of media files or content licenses that are stored on the client:

3. The method of claim 1 or claim 2, wherein the playback request originates from a device that is separate from the client and the one or more matching videos are transmitted to the device.

4. The method of claim 1 or claim 2, further comprising:
receiving, from the client, a request to modify the list of matching videos;
modifying the matching videos to produce an updated list of matching videos in response to the request to modify the list of matching videos; and
storing the updated list of matching videos on the one or more server computers so that it is accessible to a user associated with the client.

5. The method of claim 1 or claim 2, further comprising:
sending, to the client, a verification request that identifies at least one video of the list of matching videos; and
removing the at least one video identified by the verification request from the list of matching videos if a negative response is received in response to the verification request.

6. A video server (50) including one or more server computers, comprising:
an object store (70) containing a plurality of videos, each having an audio component;
a search component (60) that receives, from a client. (20), a plurality of music titles for respective music pieces that a user has the right to listen to and determines, for a music title of the plurality of music titles, that a matching video of the plurality of videos in the object store (70) has the respective music piece for the music title as an audio component of the matching video;
a list manager (80) that adds the matching video to a list (92) of matching videos and stores the list (92) of matching videos on the one or more server computers so that it is accessible to a user associated with the client (20);
a list store (90), wherein the list manager (80) associates the list (92) of matching videos with a user account specified by the client (20), and stores the list (92) of matching videos in the list store (90); and
wherein the list manager (80) is operable to receive a playback request that is associated with the user account, retrieve the list (92) of matching videos from the list store (90) based on the user account, and transmit the one or more matching videos specified by the list (92) of matching videos in response to the playback request.

7. The video server (50) of claim 6, wherein the respective music pieces correspond to at least one of media files or content licenses that are stored on the client (20).

8. The video server (50) of claim 6 or claim 7, wherein the playback request originates from a device (100) that is separate from the client (20), and the one or more matching videos are transmitted to the device (100).

9. The video server (50) of claim 6 or claim 7, wherein the list manager (80) modifies the list (92) of matching videos to produce an updated list of matching videos in response to a request, from the client (20), to modify the list (92) of matching videos, and stores the updated list of matching videos on the one or more server computers so that it is accessible to a user associated with the client (20).

10. The video server (50) of claim 6 or claim 7, wherein the list manager (80) sends, to the client (20), a verification request that identifies at least one video of the list (92) of matching videos, and removes the at least one video identified by the verification request from the list (92) of matching videos if a negative response is received in response to the verification request.

## Patentansprüche

1. Verfahren, welches durch ein oder mehr Servercomputer durchgeführt wird, umfassend:
Empfangen einer Mehrzahl von Musiktiteln für zugehörige Musikstücke, welche ein Nutzer berechtigt ist, zu hören, von einem Client;
Bestimmen für einen Musiktitel der Mehrzahl von Musiktiteln, dass ein passendes Video, welches auf den ein oder mehr Servercomputern gespeichert ist, das zugehörige Musikstück für den Musiktitel als eine Audiokomponente des passenden Videos aufweist (S104);
Hinzufügen des passenden Videos zu einer Liste von passenden Videos (S105);
Speichern der Liste von passenden Videos (S107) auf den ein oder mehr Servercomputern derart, dass sie für einen Nutzer zugreifbar ist, der dem Client zugeordnet ist;
Zuordnen der Liste von passenden Videos zu einem Nutzerkonto, welches durch den Client bestimmt ist;
Empfangen einer Wiedergabeanfrage, welche dem Nutzerkonto zugeordnet ist; und
Übertragen von ein oder mehr passenden Videos, welche durch die Liste von passenden Videos bestimmt sind, als Antwort auf die Wiedergabeanfrage.

2. Verfahren nach Anspruch 1, wobei die zugehörigen Musikstücke, welche der Nutzer berechtigt ist, zu hören, Mediendateien und/oder Inhaltslizenzen, welche auf dem Client gespeichert sind, entsprechen.

3. Verfahren nach Anspruch 1 oder Anspruch 2, wobei die Wiedergabeanfrage von einem Gerät kommt, welches von dem Client getrennt ist, und die ein oder mehr passenden Videos an das Gerät übertragen werden.

4. Verfahren nach Anspruch 1 oder Anspruch 2, ferner umfassend:
Empfangen einer Anfrage zum Ändern der Liste von passenden Videos von dem Client;
Ändern der passenden Videos, um eine aktualisierte Liste von passenden Videos zu erzeugen, als Antwort auf die Anfrage zum Ändern der Liste von passenden Videos; und
Speichern der aktualisierten Liste von passenden Videos auf den ein oder mehr Servercomputern derart, dass sie für einen Nutzer zugreifbar ist, der dem Client zugeordnet ist.

5. Verfahren nach Anspruch 1 oder Anspruch 2, ferner umfassend:
Senden einer Überprüfungsanfrage, welche wenigstens ein Video der Liste von passenden Videos identifiziert, an den Client; und
Entfernen des wenigstens einen Videos, welches durch die Überprüfungsanfrage identifiziert wird, aus der Liste von passenden Videos, falls eine negative Antwort als Antwort auf die Überprüfungsanfrage empfangen wird.

6. Videoserver (50), welcher ein oder mehr Servercomputer enthält, umfassend:
einen Objektspeicher (70), der eine Mehrzahl von Videos enthält, die jeweils eine Audiokomponente aufweisen;
eine Suchkomponente (60), welche von einem Client (20) eine Mehrzahl von Musiktiteln für zugehörige Musikstücke, welche ein Nutzer berechtigt ist, zu hören, empfängt und für einen Musiktitel der Mehrzahl von Musiktiteln bestimmt, dass ein passendes Video der Mehrzahl von Videos in dem Objektspeicher (70) das zugehörige Musikstück für den Musiktitel als eine Audiokomponente des passenden Videos aufweist;
einen Listenmanager (80), welcher das passende Video zu einer Liste (92) von passenden Videos hinzufügt und die Liste (92) von passenden Videos auf den ein oder mehr Servercomputern derart speichert, dass sie für einem Nutzer zugreifbar ist, der dem Client (20) zugeordnet ist;
einen Listenspeicher (90), wobei der Listenmanager (80) die Liste (92) von passenden Videos einem Nutzerkonto zuordnet, das durch den Client (20) bestimmt ist, und die Liste (92) von passenden Videos in dem Listenspeicher (90) speichert; und
wobei der Listenmanager (80) dazu betriebsfähig ist, eine Wiedergabeanfrage, welche dem Nutzerkonto zugeordnet ist, zu empfangen, die Liste (92) von passenden Videos aus dem Listenspeicher (90) basierend auf dem Nutzerkonto zu holen und die ein oder mehr passenden Videos, die durch die Liste (92) von passenden Videos bestimmt sind, als Antwort auf die Wiedergabeanfrage zu übertragen.

7. Videoserver (50) nach Anspruch 6, wobei die zugehörigen Musikstücke Mediendateien und/oder Inhaltslizenzen, welche auf dem Client (20) gespeichert sind, entsprechen.

8. Videoserver (50) nach Anspruch 6 oder Anspruch 7, wobei die Wiedergabeanfrage von einem Gerät (100) kommt, welches von dem Client (20) getrennt ist, und die ein oder mehr passenden Videos an das Gerät (100) übertragen werden.

9. Videoserver (50) nach Anspruch 6 oder Anspruch 7, wobei der Listenmanager (80) die Liste (92) von passenden Videos ändert, um eine aktualisierte Liste von passenden Videos zu erzeugen, als Antwort auf eine Anfrage von dem Client (20) zum Ändern der Liste (92) von passenden Videos und die aktualisierte Liste von passenden Videos auf den ein oder mehr Servercomputern derart speichert, dass sie für einen Nutzer zugreifbar ist, der dem Client (20) zugeordnet ist.

10. Videoserver (50) nach Anspruch 6 oder Anspruch 7, wobei der Listenmanager (80) an den Client (20) eine Überprüfungsanfrage, welche wenigstens ein Video der Liste (92) von passenden Videos identifiziert, sendet und das wenigstens eine Video, welches durch die Überprüfungsanfrage identifiziert ist, aus der Liste (92) von passenden Videos entfernt, falls eine negative Antwort als Antwort auf die Überprüfungsanfrage empfangen wird.

## Revendications

1. Un procédé mis en oeuvre par un ou plusieurs ordinateurs serveurs, comprenant :
le fait de recevoir, d'un client, une pluralité de titres de musique pour des morceaux de musique respectifs qu'un utilisateur a le droit d'écouter ;
le fait de déterminer, pour un titre de musique de la pluralité de titres de musique, qu'une vidéo correspondante stockée sur un ou plusieurs ordinateurs serveurs a le morceau de musique respectif pour le titre de musique en tant que composant audio de la vidéo correspondante (S 104) ;
le fait d'ajouter la vidéo correspondante à une liste de vidéos correspondantes (S 105) ;
le fait de stocker la liste des vidéos correspondantes (S 107) sur lesdits un ou plusieurs ordinateurs serveurs de sorte qu'elle soit accessible à un utilisateur associé au client ;
le fait d'associer la liste des vidéos correspondantes avec un compte d'utilisateur spécifié par le client ;
le fait de recevoir une demande de lecture qui est associée au compte d'utilisateur ; et
le fait de transmettre une ou plusieurs vidéos correspondantes spécifiées par la liste des vidéos correspondantes en réponse à la demande de lecture.

2. Le procédé selon la revendication 1, dans lequel les morceaux de musique respectifs que l'utilisateur a le droit d'écouter correspondent à au moins l'un des fichiers multimédias ou des licences de contenus qui sont stockés sur le client.

3. Le procédé selon la revendication 1 ou la revendication 2, dans lequel la demande de lecture provient d'un dispositif qui est séparé par rapport au client et les unes ou plusieurs vidéos correspondantes sont transmises au dispositif.

4. Le procédé selon la revendication 1 ou la revendication 2, comprenant en outre :
le fait de recevoir du client une demande de modification de la liste des vidéos correspondantes ;
le fait de modifier les vidéos correspondantes pour produire une liste actualisée des vidéos correspondantes en réponse à la demande de modification de la liste des vidéos correspondantes ; et
le fait de stocker la liste actualisée des vidéos correspondantes sur lesdits un ou plusieurs ordinateurs serveurs de sorte qu'elle soit accessible à un utilisateur associé au client.

5. Le procédé selon la revendication 1 ou la revendication 2, comprenant en outre :
le fait d'envoyer, au client, une demande de vérification qui identifie au moins une vidéo de la liste des vidéos correspondantes ; et
le fait de retirer ladite au moins une vidéo identifiée par la demande de vérification de la liste de vidéos correspondantes si une réponse négative est reçue en réponse à la demande de vérification.

6. Un serveur vidéo (50) incluant un ou plusieurs ordinateurs serveurs, comprenant :
un magasin d'objets (70) contenant une pluralité de vidéos, ayant chacune un composant audio ;
un composant de recherche (60) qui reçoit, d'un client (20), une pluralité de titres de musique pour des morceaux de musique respectifs qu'un utilisateur a le droit d'écouter et qui détermine, pour un titre de musique de la pluralité des titres de musique, qu'une vidéo correspondante de la pluralité de vidéos présente dans le magasin d'objets (70) comprend le morceau de musique respectif pour le titre de musique en tant que composant audio de la vidéo correspondante ;
un gestionnaire de liste (80) qui ajoute la vidéo correspondante à une liste (92) de vidéos correspondantes et qui stocke la liste (92) de vidéos correspondantes sur lesdits un ou plusieurs ordinateurs serveurs de sorte qu'elle soit accessible à un utilisateur associé au client (20) ;
un magasin de liste (90), dans lequel le gestionnaire de liste (80) associe la liste (92) de vidéos correspondantes à un compte d'utilisateur spécifié par le client (20), et stocke la liste (92) de vidéos correspondantes dans le magasin de liste (90) ; et
dans lequel le gestionnaire de liste (80) est utilisable pour recevoir une demande de lecture qui est associée au compte d'utilisateur, récupère la liste (92) des vidéos correspondantes dans le magasin de liste (90) sur la base du compte d'utilisateur, et pour transmettre lesdites une ou plusieurs vidéos correspondantes spécifiées par la liste (92) des vidéos correspondantes en réponse à la demande de lecture.

7. Le serveur vidéo (50) selon la revendication 6, dans lequel les morceaux de musique respectifs correspondent à au moins l'un des fichiers multimédias ou licences de contenus qui sont stockés sur le client (20).

8. Le serveur vidéo (50) selon la revendication 6 ou la revendication 7, dans lequel la demande de lecture provient d'un dispositif (100) qui est séparé du client (20) et lesdites une ou plus des vidéos correspondantes sont transmises au dispositif (100).

9. Le serveur vidéo (50) selon la revendication 6 ou la revendication 7, dans lequel le gestionnaire de liste (80) modifie la liste (92) des vidéos correspondantes pour produire une liste actualisée des vidéos correspondantes en réponse à une demande, émanant du client (20 ), de modifier la liste (92) des vidéos correspondantes, et stocke la liste actualisée des vidéos correspondantes sur lesdits un ou plusieurs ordinateurs serveurs afin qu'elle soit accessible à un utilisateur associé au client (20).

10. Le serveur vidéo (50) selon la revendication 6 ou la revendication 7, dans lequel le gestionnaire de liste (80) envoie au client (20), une demande de vérification qui identifie au moins une vidéo de la liste (92) des vidéos correspondantes, et supprime ladite au moins une vidéo identifiée par la demande de vérification de la liste (92) des vidéos correspondantes si une réponse négative est reçue en réponse à la demande de vérification.
